# EUROPEAN PATENT SPECIFICATION

(11) **EP 1 588 615 B1**
(45) Date of publication and mention of the grant of the patent: **11.06.2008**
(21) Application number: 05075954.7
(22) Date of filing: 21.04.2005
(51) Int. Cl.: A01M 21/04, E01H 11/00

(54) **Method and apparatus for controlling weed**
Verfahren und Vorrichtung zur Vernichtung von Unkraut
Méthode et appareil pour détruire les adventices

(30) Priority: 22.04.2004 NL 1025996; 25.10.2004 NL 1027329
(43) Date of publication of application: 26.10.2005
(73) Proprietor: Front2Front B.V., 6733 JD Wekerom (NL)
(72) Inventor: Van de Haar, Hendrik, 6733 JA Wekerom (NL); Morren, Gijsbert, 6731 BE Otterlo (NL)
(74) Representative: Bartelds, Erik

(56) References cited:
- WO-A-94/26102
- WO-A-99/38378
- GB-A- 2 332 849
- NL-C- 1 018 458
- US-A- 5 924 239

## Description

The invention relates to a method for controlling weed growing on a ground surface, comprising of displacing a supply of hot liquid over the ground surface and dispensing the hot liquid onto the ground surface in substantially pressureless manner, wherein a search is made for the weed and the hot liquid is only dispensed onto or in the direct vicinity of detected weed plants. Such a method is known, e.g. from GB-A-2 332 849.

Different methods are known for removing weed from for instance streets and pavements. It is for instance possible to spray chemical weed killer on the weed plants. This is relatively simple and effective, but the use of such means has been questioned in recent years in view of the associated risks for humans and the environment. It is also possible to burn away weed plants. This is however a complicated operation which is not wholly without risk to the surrounding area. Another option is to remove weed using brushes. This method of weed control requires relatively high investment in equipment. Finally it is known to control weed using hot water, i.e. water at a temperature of about 80 to 100°C.

In the known method of weed control with hot water use is made of a vehicle on which are fitted one or more containers with hot water. The water is held at the required temperature by burners. The vehicle is provided with a number of dispensing openings which are distributed in width direction, thus transversely of the direction of travel, and through which the hot water can flow out of Lhe container(s) along a relatively great width over the ground surface on which the weed is growing. The vehicle can be self-propelling, but the installation can also be arranged on a frame which can be connected to a driving vehicle, for instance a tractor.

Controlling weed using hot water has the advantage of being environmentally-friendly. The drawback of the known control method is however that it is relatively costly. This is because large quantities of water have to be heated to relatively high temperature. Because water has a high heat content, much energy is therefore required. The operation must moreover be interrupted regularly to replenish water.

The above-identified prior art document GB-A-2 332 849 discloses a method for treating soil to control weed growth in which water is contained in an insulated tank mounted on an agricultural tractor. Water from the tank is heated in a heating device driven by, for example, the tractor power take off shaft to temperatures exceeding boiling point, e.g. within the range of 600 to 700°C. Superheated water and/or steam is sprayed on to weeds or into the soil through a number of side-by-side downwardly directed outlet nozzles. The outlet nozzles are kept at a constant height above the ground by a sensor device. This sensor device is used in conjunction with a video recognition system which is programmed to identify weeds so that high temperature water or steam is sprayed only on to the weeds and not on to areas in which there are no weeds. Spraying can thus be very selective and precise.

The invention therefore has for its object to provide an improved method of this type. According to the invention this is achieved in such a control method in that the supply of hot liquid is stored in at least one buffer which is connected to an number of dispensing openings, and the hot liquid is dispensed only by that/those dispensing opening(s) situated above or in the direct vicinity of the detected weed plants, the hot liquid from the at least one buffer circulating constantly along the different dispensing openings, and being delivered by operating a closing valve co-acting with the relevant dispensing opening(s). A considerable saving of water and energy is achieved by dispensing the hot liquid only at those locations where weed is actually present instead of over the whole operating width. By storing the hot liquid in a buffer and circulating it along the dispensing openings, the hot liquid can flow out directly at the desired position when weed is detected while cooling of the liquid is prevented as far as possible.

When the hot liquid is moreover stored under pressure in the buffer, the liquid can flow very rapidly to the desired dispensing opening(s). The liquid can furthermore thus be stored at a temperature higher than the boiling point under atmospheric pressure, so that despite some cooling between the buffer and the dispensing opening(s) the liquid flows out at sufficiently high temperature.

A very efficient control of weed is achieved when the liquid has a temperature when it leaves the dispensing opening(s) which lies between 80 and 100°C, preferably between 90 and 99°C and more preferably between 93 and 98°C.

In order to obtain a considerable operating width, it is recommended that the hot liquid is distributed by the dispensing openings transversely of the direction of displacement.

The hot liquid can also be distributed by the dispensing openings in the direction of displacement. In this case the hot liquid is preferably dispensed successively by different dispensing openings lying one behind another in the direction of displacement. Every weed plant can thus be killed with several successive jets of liquid.

Prior to the storage in the at least one buffer, the liquid is preferably stored cold in at least one supply container and heated when it flows from the at least one supply container to the at least one buffer. Only a relatively small quantity of liquid thus need be held constantly at the required temperature, thereby further limiting energy consumption.

A simple and reliable detection of the presence of weed is achieved when it is searched for by optical means. The difference in reflection ot incident sunlight between the ground surface and the weed can for instance be detected. The ground surface with the weed thereon can also be actively illuminated, for instance with infrared radiation.

Although the hot liquid could be dispensed with human intervention, for instance as soon as an operative detects weed, it is recommended that the dispensing of the hot liquid is electronically controlled. A reliable, uniform and reproducible method of weed control is thus achieved which does not depend on the skill, motivation and/or condition of operative personnel.

The invention also relates to an apparatus for performing the above described method. A prior art apparatus for controlling weed growing on a ground surface by means of hot liquid as disclosed in GB-A-2 332 849 comprises a frame displaceable over the ground surface and having means for storing and feeding hot liquid, means for dispensing the hot liquid onto the ground surface in substantially pressureless manner and control means which control the dispensing means such that the hot liquid is only delivered onto or in the direct vicinity of detected weed plants. The apparatus according to the invention is now distinguished from this known weed control apparatus in that the storage and feed means for the hot liquid comprise at least one buffer, and the dispensing means comprise a number of dispensing openings which are connected to the at least one buffer and which can be operated by the control means, wherein Lhe different dispensing openings are connected to the at least one buffer by a ring conduit in which a circulation pump is received, in addition to a number of closing valves which co-act with the relevant dispensing opening(s) and which can be operated by the control means.

The dispensing openings can herein be arranged in the frame distributed transversely of the direction of displacement or in the direction of displacement.

In order to enable a correct amount of hot liquid to be dispensed each time, which can be related to the size of the detected weed plant, the control means are preferably adapted to determine the opening duration and/or the degree of opening of the closing valves. In order ensure here that sufficient liquid is delivered, also when the apparatus is displaced at considerable speed over the ground surface, a preferred embodiment of the apparatus is provided with at least one speedometer connected in signal-generating manner to the control means, wherein the control means are adapted to determine the opening duration and/or the degree of opening of the closing valves on the basis of a signal generated by the speedometer.

When the frame comprises a number of frame parts connected movably to each other, and the dispensing openings in each frame part are connected by an associated ring conduit to the at least one buffer, the operating width of the apparatus can readily be modified to the conditions.

For more rapid operation the apparatus can be further provided with means connected to the at least one buffer for creating an overpressure therein, whereby the hot liquid is urged to the dispensing openings.

The storage and feed means for the hot liquid preferably comprise at least one supply container for cold liquid, as well as at least one pump and heating means which are arranged between the at least one supply container and the at least one buffer and which are connected to the control means, so that the greater part of the liquid can be stored unheated, and losses are limited. The apparatus can then be provided herein with means connected to the control means for measuring the temperature and the level of the hot liquid in the at least one buffer so that the pump and the heating means can be switched on if the liquid in the buffer cools too strongly or the liquid level drops too low.

In order to further improve the effectiveness of the apparatus, the dispensing openings preferably take a divided form. These can for instance be reverse Y-shaped outflow parts, whereby the liquid is distributed to some extent and reaches a larger surface area. An elongate outflow chamber can also be envisaged with a large number of small outflow apertures.

So as not to be dependent on - inherently subjective - human observation of the presence of weed, the apparatus preferably has means for searching for the weed connected in signal-generating manner to the control means. These search means can comprise at least one sensor directed at the ground surface, preferably an optical sensor, such as a sensor sensitive to radiation in the infrared or red wavelength range. The difference in reflection of incident light between the weed and the ground surface is the greatest in this range.

The invention is now elucidated with reference to an exemplary embodiment, wherein reference is made to the accompanying drawing, in which:
Fig. 1 shows a schematic top view of an apparatus according to the invention moving over a ground surface with weed,
Fig. 2 shows a hydraulic diagram of the buffers and some of the dispensing openings of the apparatus of fig. 1,
Fig. 3 shows a hydraulic diagram of the supply containers and heating means of the apparatus of fig. 1,
Fig. 4 shows a diagram of the control system of the apparatus of fig. 1-3, and
Fig. 5 is a perspective bottom view of the physical embodiment of the apparatus according to the invention, wherein some parts are omitted for the sake of clarity.

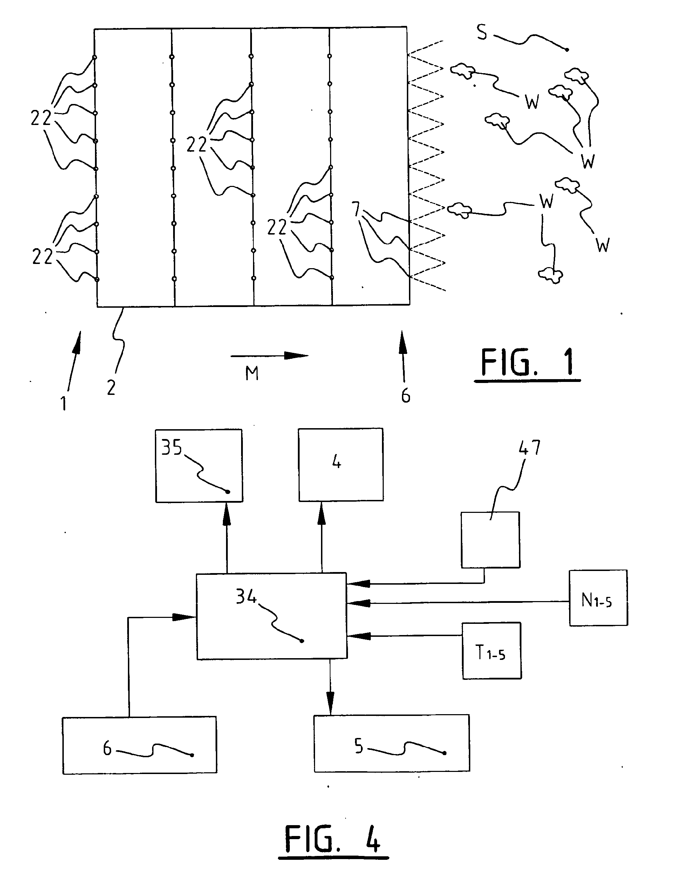

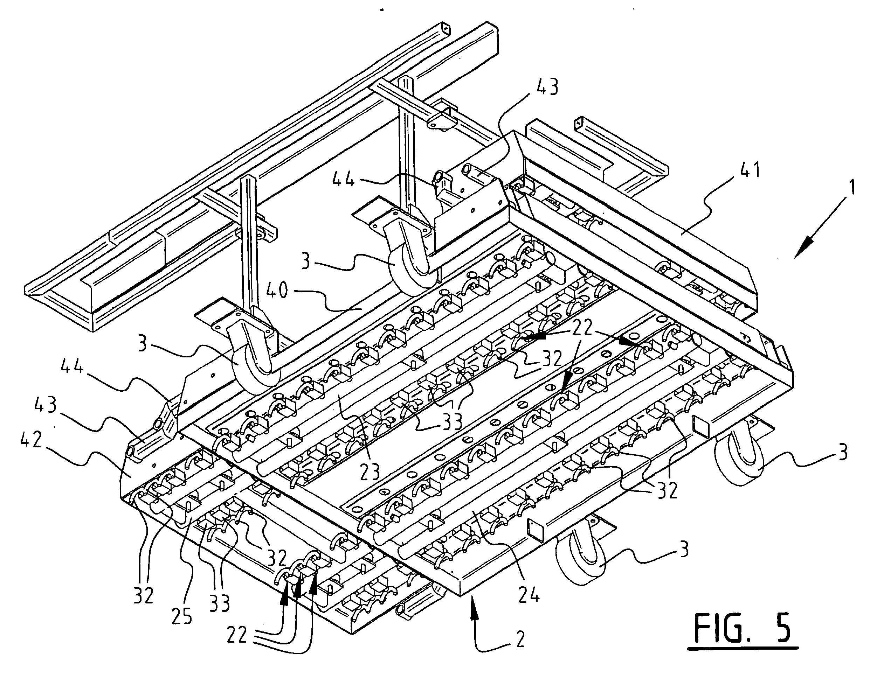

In order to control weed plants W growing on a ground surface S, for instance a road or pavement, use is made according to the invention of a control apparatus 1 which can be displaced (in the direction of arrow M) over ground surface S (fig. 1). In the shown embodiment this apparatus 1 comprises a frame 2 with wheels 3 (fig. 5), whereby it is mobile. Although apparatus 1 could be given a self-propelling form, the apparatus in the shown embodiment is intended for coupling to a machine-carrying vehicle, for instance a tractor.

Means 4 for storing and feeding hot liquid, for instance hot water, are arranged on the machine-carrying vehicle. Frame 2 carries means 5 for dispensing this hot water on ground surface S in substantially pressureless manner. Frame 2 here further carries - at the front as seen in the direction of displacement - means 6 for searching for the weed plants W on ground surface S. These search means 6 are formed here by a number of optical or light-sensitive sensors 7.

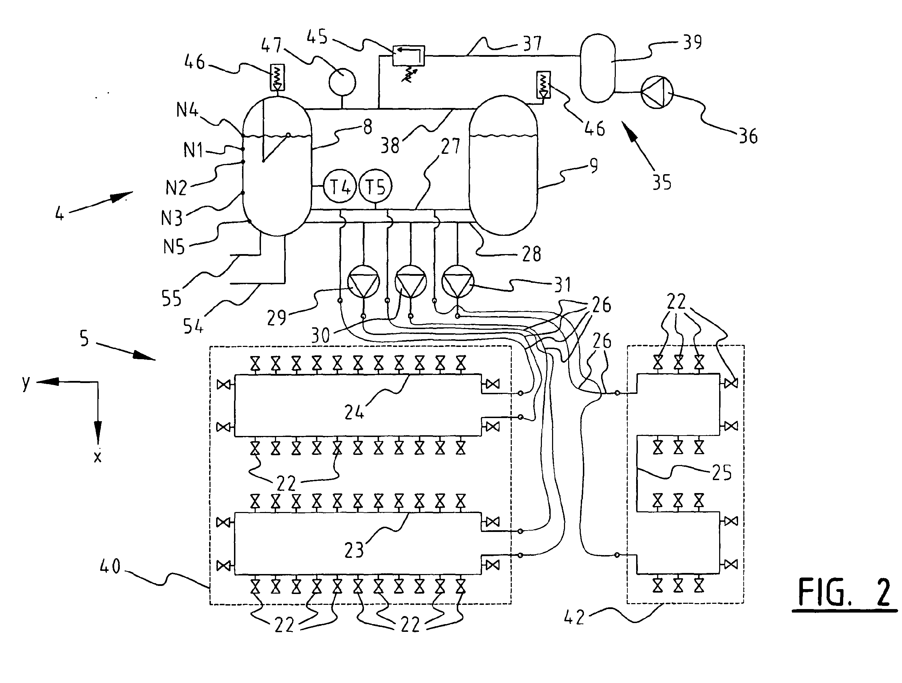

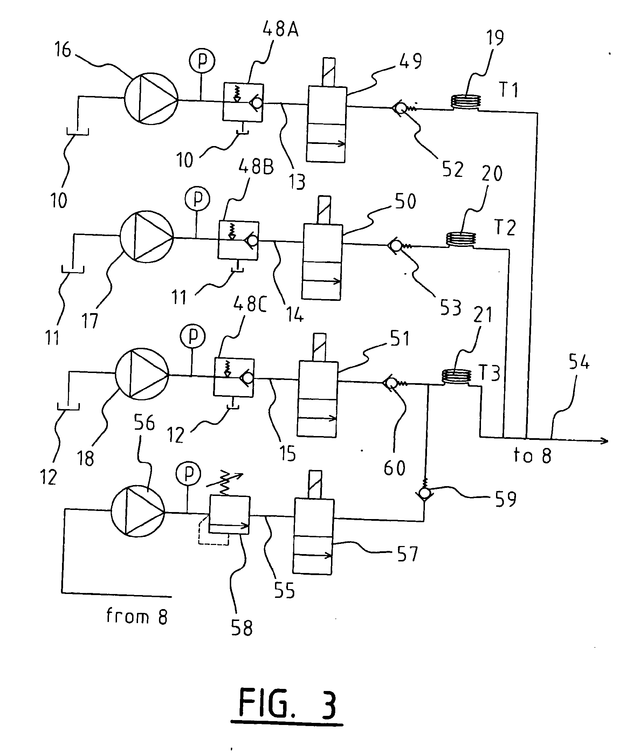

The storage and feed means 4 for the hot water here comprise two mutually connected buffers 8, 9 in which the hot water is stored under pressure for direct use (fig. 2). In addition, these storage and feed means 4 comprise a number of supply containers 10, 11, 12 in which the water can be stored as long as it has not yet been heated (fig. 3). These supply containers 10-12 are connected to buffer 8 by conduits 13, 14, 15 in which are arranged in each case a pump 16, 17, 18 and heating means 19, 20, 21, for instance in the form of burners along which the liquid is guided. Conduits 13-15 debouch in a manifold 54 leading to buffer 8. Although three separate supply containers 10-12 are shown here, use will usually be made in practice of a single supply container to which are connected the different conduits 13-15 with the pumps 16-18 arranged therein.

The liquid dispensing means 5 comprise a number of dispensing openings 22 which are arranged distributed in frame 2 in both the width direction y, thus transversely of the direction of displacement M, and in the length direction x, thus parallel to the direction of displacement M. Dispensing openings 22 are arranged in ring conduits 23, 24, 25 which in the shown embodiment are connected via hoses 26 to connecting lines 27, 28 which mutually connect the two buffers 8, 9. Due to the presence of these connecting lines 27, 28 the buffers 8, 9 function as communicating vessels. The hot liquid from buffers 8, 9 is pumped through each ring conduit 23, 24, 25 by a circulation pump 29, 30, 31 which is adapted to produce a relatively high flow rate at a relatively low pressure. Owing to this continuous circulation liquid is available for dispensing at any moment at each dispensing opening 22, so that apparatus 1 can respond rapidly to detected weed plants W. In this manner the liquid moreover cools less than if it were at a standstill in the conduits. When it leaves dispensing openings 22, the temperature of the water amounts to about 80 to 100°C, preferably about 90 to 99°C and more preferably about 93 to 98°C.

In the shown embodiment frame 2 consists of a central frame part 40 and two side parts 41, 42 which are each connected pivotally to central part 40 by means of arms 43, 44 (fig. 5). In this way the operating width of apparatus 1 can be varied. In each of the frame parts 40-42 dispensing openings 22 are arranged in "rows" (transversely of the direction of displacement M) and "columns" (in the direction of displacement M). In the shown embodiment two rows of dispensing openings 22 in the central frame part 40 are connected in each case to a ring conduit 23, 24, while all dispensing openings 22 in each of the side parts 41, 42 (only one of which is shown in fig. 2) are connected in each case to a single ring conduit 25.

In the shown embodiment each dispensing opening 22 is otherwise formed by a reverse Y-shaped outflow part 32 which is connected via a controllable closing valve 33 to the relevant ring conduit 23, 24 or 25. By opening the - normally closed - valve 33 the hot liquid - mainly under the influence of gravity and so in almost pressureless manner - can run out of ring conduit 23, 24, 25 through outflow part 32 onto the ground surface S. The reverse Y-shaped configuration of outflow part 32 herein ensures that the liquid is distributed to some extent, and thus covers a larger area than would be possible with a single opening. Instead of the shown configuration there could also be provided a number of elongate outflow chambers which could each have a large number of small outflow openings.

In order to limit as far as possible the amount of hot water to be delivered to the ground surface S, the invention has the stated provision that a search is made for weed plants W, and hot water is only dispensed onto or in the direct vicinity of weed plants W. Provided for this purpose are the search means 6 which are formed by a number of optical or light-sensitive sensors 7. These sensors 7 are oriented such that they scan the ground surface S some distance in front of apparatus 1.

In the shown embodiment, sensors 7 are used which are sensitive to light in the red and/or infrared wavelength range. In this range the differences in reflection of incident sunlight between ground surface S and weed plants W are the most pronounced, so that a reliable indication is hereby obtained of the presence of such plants W. Search means 6 could also comprise a number of radiation or lighting sources (not shown here) operating in the stated wavelength range. Apparatus 1 would thus not depend for its operation on incident sunlight.

The number of sensors 7 can correspond to the number of dispensing openings 22 placed adjacently of each other in width direction, so that it is possible to determine for each dispensing opening 22 individually whether a weed plant W is situated in its path. Conversely, it is also possible to envisage the use of a smaller number of sensors 7 when each sensor 7 covers a greater width. This can be achieved for instance if sensors 7 were to take the form of CCD matrices which make in each case a recording of a considerable part of ground surface S. Such CCD matrices, which could be part of a digital camera, could co-act with image recognition software.

Search means 6 are connected in signal-generating manner to control means 34, for instance in the form of a PLC or a PC (fig. 4). These control means 34 are in turn connected in controlling manner to the dispensing openings, more particularly to the closing valves 33 associated therewith. When sensors 7 detect the presence of weed plants W in front of apparatus 1, control means 34 determine by which dispensing opening(s) 22 hot water must be delivered so as to strike these plants W. It may be that the detected weed plant W lies almost precisely in the path of one of the dispensing openings 22, so that only this relevant opening 22 need then be activated. If however the plant W is situated between the paths of two adjacent dispensing openings 22, it may be necessary to activate both these openings 22.

On the basis of the speed at which apparatus 1 moves over ground surface S, control means 34 further calculate when the relevant dispensing opening(s) 22 are situated above the detected weed plants W so as to enable operation of the associated closing valve(s) 33 at the correct moment. Control means 34 can optionally also be adapted to determine the size of each weed plant W on the basis of detection by sensors 7. The amount of hot water to be delivered could then be adjusted, for instance by lengthening or shortening the duration for which closing valve 33 is opened and/or by increasing or decreasing the degree of opening of valve 33. Control means 34 can also successively activate a number of dispensing openings 22 placed one behind another in the same path in the direction of movement M, whereby a weed plant W is sprinkled more than once with hot water.

By thus delivering hot water only where a weed plant W is indeed located, the water consumption and thereby also the energy consumption is considerably limited compared to conventional apparatus of this type.

The hot water to be dispensed onto weed plants W is, as stated, stored in the shown embodiment in buffers 8, 9 from which it circulates along dispensing openings 22. In order to increase the speed with which the water reaches dispensing openings 22, means 35 are present to bring the content of buffers 8, 9 under a small overpressure, for instance in the order of 1 bar. This overpressure moreover achieves that the water in buffers 8, 9 can be stored at a temperature of more than 100°C, the boiling point at atmospheric pressure. Thus, despite the unavoidable cooling of 5 to 10°C during the circulation through conduits 23, 24, 25, the water can still flow at a temperature of almost 100°C out of dispensing opening(s) 22.

These pressure means 35 are formed here by a compressor 36 which is connected via a line 37 and a connecting line 38 to the top side of each of the buffers 8, 9. Further arranged here in line 37 is an accumulator 39, as well as a pressure control valve 45. Buffers 8, 9 are provided with pressure relief valves 46. A manometer 47 is further also arranged in connecting line 38. Although pressure means 35, and more particularly compressor 36 and pressure control valve 45, could be controlled by control means 34, a choice is made in the shown embodiment for an independently operating system.

A number of level meters N₁-N₅ are received in buffer 8. These level meters N₁-N₅ are connected in signal-generating manner to control means 35. Temperature sensors T₄ and T₅ are also arranged respectively in buffer 8 and connecting line 27 and are likewise connected in signal-generating manner to control means 35. Control means 34 are in turn connected in controlling manner to the storage and feed means 4 for the hot water, and more particularly pumps 16-18, heating means 19-21 and the different valves in conduits 13-15 discussed hereinbelow.

On the basis of the signals from level meters N₁-N₅ and temperature sensors T₄, T₅ the control means 34 determine whether the quantity of hot water in buffers 8, 9 is still sufficient and whether this water is still sufficiently hot. Should this not be the case, one or more of the pumps 16-18 is then started, whereby cold water is pumped from the associated supply containers 10-12 to heating means 19-21. Pumps 16-18 and heating means 19-21 can have different power levels for replenishing buffers 8, 9 more or less quickly.

An automatic pressure control 48A, 48B, 48C is also arranged between each pump 16-18 and the associated heating means 19-21, whereby in the case of too high a pressure the water is fed back again to the associated supply container 10-12. In addition, there is arranged successively between each automatic pressure control 48A-C and the associated heating means 19-21 a valve 49, 50, 51 controllable by control means 34 and a non-return valve 52, 53, 60. Further arranged in each conduit 13-15 downstream of heating means 19-21 is a temperature sensor T₁-T₃ which is connected in signal-generating manner to control means 34. The temperature signals from these sensor T₁-T₃ are used specifically to monitor the state of the apparatus with a view to maintenance.

Finally, buffer 8 is connected via a heating conduit 55 with a pump 56 therein to the heating means 21 of the third supply container 12. Between pump 56 and these heating means 19 a pressure control valve 58, a valve 57 controllable by control means 34 and a non-return valve 58 are further arranged in heating conduit 55. Interim heating of the water in buffer 8 can hereby take place when sensor T₄ or T₅ indicates that the temperature thereof has fallen too low, while the level has not yet fallen so far that fresh water needs to be provided.

The water is pumped to buffer 8 from one or more of the supply containers 10-12 by the associated pump 16-18 along heating means 19-21 via manifold 54. This is continued until the level meters N₁-N₅ generate signals that the liquid level in buffer 8, and thus also in buffer 9, has been brought to the required level again, whereafter control means 34 close the different valves 49-51. Pumps 16-18 can herein remain switched-on, and liquid being pumped out of supply containers 10-12 can flow back via the automatic pressure controls 48A-C to supply containers 10-12. If during pumping one of the temperature sensors T₄, T₅ senses that the temperature of the water is still too low to be transferred directly from buffer 8 to dispensing openings 22, and is for instance less than 95°C, this information is passed to control means 34.

In this case valve 57 is opened and pump 56 started as soon as valves 49-51 are closed. The water is then pumped out of buffer 8 through heating conduit 55 along heating means 21 until temperature sensors T₄, T₅ indicate that it has reached the desired temperature. Pump 56 is then stopped and valve 57 closed, and the water in buffers 8 and 9 is ready to be dispensed through openings 22. This additional heating of the water after replenishing of buffers 8, 9 need only take place in practice when apparatus 1 has not been used for some time. During normal use of apparatus 1 the conduits 13-15 remain so warm that the water has the desired temperature once it has passed through heating means 19-21. For the additional heating only the valve 51 need in principle be closed, so that it is already possible to begin herewith while buffers 8, 9 are still being replenished via conduits 13, 14.

The above described apparatus 1 for selective outflow of hot water onto weed plants W detected by sensors 7 makes it possible to combat weed in environmentally-friendly manner at relatively low cost.

Although the invention is elucidated above with reference to an embodiment, it will be apparent that this can be varied in many ways. The use of sensors could thus be dispensed with, and the control means could be connected to a control panel, so that a user of the apparatus could activate the closing valves on the basis of his/her own observation of the presence of weed and could thus control the delivery of the hot liquid. Sensors other than the optical sensors described here could also be applied, for instance acoustic or thermal sensors, or even mechanically operating sensors. The choice of the form and arrangement of the dispensing openings could also be different. The conduit systems between the different supply containers, buffers and dispensing openings could also take a different form, while more or fewer supply containers, buffers, pumps and heating means than shown here could of course also be applied.

The scope of the invention is therefore defined solely by the following claims.

## Claims

1. Method for controlling weed (W) growing on a ground surface (S), comprising of displacing a supply of hot liquid over the ground surface (S) and dispensing the hot liquid onto the ground surface (S) in substantially pressureless manner,
wherein a search is made for the weed (W) and the hot liquid is only dispensed onto or in the direct vicinity of detected weed (W) plants,
**characterized in that** the supply of hot liquid is stored in at least one buffer (8,9) which is connected to a number of dispensing openings (22), and the hot liquid is dispensed only by that/those dispensing opening(s) (22) situated above or in the direct vicinity of the detected weed plants (W),
the hot liquid from the at least one buffer (8,9) circulating constantly along the different dispensing openings (22), and being delivered by operating a closing valve (23) co-acting with the relevant dispensing opening(s) (22).

2. Method as claimed in claim 1, **characterized in that** the hot liquid is stored under pressure in the buffer (8,9).

3. Method as claimed in claim 1 or 2, **characterized in that** the liquid has a temperature when it leaves the dispensing opening(s) (22) which lies between 80 and 100°C, preferably between 90 and 99°C and more preferably between 93 and 98°C.

4. Method as claimed in any of the preceding claims, **characterized in that** the hot liquid is distributed by the dispensing openings (22) transversely of the direction of displacement (M).

5. Method as claimed in any of the preceding claims, **characterized in that** the hot liquid is distributed by the dispensing openings (22) in the direction of displacement (M).

6. Method as claimed in claim 5, **characterized in that** the hot liquid is dispensed successively by different dispensing openings (22) lying one behind another in the direction of displacement (M).

7. Method as claimed in any of the preceding claims, **characterized in that** prior to the storage in the at least one buffer (8,9) the liquid is stored cold in at least one supply container (10-12) and is heated when it flows from the at least one supply container (10-12) to the at least one buffer (8,9).

8. Method as claimed in any of the preceding claims, **characterized in that** the weed (W) is searched for by optical means (6,7).

9. Method as claimed in claim 8, **characterized in that** the dispensing of the hot liquid is electronically controlled.

10. Apparatus (1) for controlling weed (W) growing on a ground surface (S), comprising a frame (2) displaceable over the ground surface (S) and having means (4) for storing and feeding hot liquid, means (5) for dispensing the hot liquid onto the ground surface (S) in substantially pressureless manner, and control means (34) which control the dispensing means (5) such that the hot liquid is only delivered onto or in the direct vicinity of detected weed plants (W),
**characterized in that** the storage and feed means (4) for the hot liquid comprise at least one buffer (8,9), and the dispensing means (5) comprise a number of dispensing openings (22) which are connected to the at least one buffer (8,9) and which can be operated by the Control means (34), wherein the different dispensing openings (22) are connected to the at least one buffer (8,9) by a ring conduit (23,24,25) in which a circulation pump (29,30,31) is arranged, in addition to a number of closing valves (33) which co-act with the relevant dispensing opening(s) (22) and which can be operated by the control means (34).

11. Apparatus (1) as claimed in claim 10, **characterized in that** the control means (34) are adapted to determine the opening duration and/or the degree of opening of the closing valves (33).

12. Apparatus (1) as claimed in claim 11, **characterized by** at least one speedometer connected in signal-generating manner to the control means (34), wherein the control means (34) are adapted to determine the opening duration and/or the degree of opening of the closing valves (33) on the basis of a signal generated by the speedometer.

13. Apparatus (1) as claimed in any of the claims 10-12, **characterized in that** the frame (2) comprises a number of frame parts (40,41,42) connected movably to each other, and the dispensing openings (22) in each frame part (40,41,42) are connected by an associated ring conduit (23,24,25) to the at least one buffer (8,9).

14. Apparatus (1) as claimed in any of the claims 10-13, **characterized in that** the dispensing openings (22) are arranged in the frame (2) distributed transversely of the direction of displacement (M).

15. Apparatus (1) as claimed in any of the claims 10-14, **characterized in that** the dispensing openings (22) are arranged in the frame (2) distributed in the direction of displacement (M).

16. Apparatus (1) as claimed in claim 15, **characterized in that** the control means (34) are adapted to successively operate different dispensing openings (22) arranged one behind another in the direction of displacement (M).

17. Apparatus (1) as claimed in any of the claims 10-16, **characterized by** means (35) connected to the at least one buffer (8,9) for creating an overpressure therein.

18. Apparatus (1) as claimed in any of the claims 10-17, **characterized in that** the storage and feed means (4) for the hot liquid comprise at least one supply container (10-12) for cold liquid, as well as at least one pump (16-18) and heating means (19-21) which are arranged between the at least one supply container (10-12) and the at least one buffer (8,9) and which are connected to the control means (34).

19. Apparatus (1) as claimed in claim 18, **characterized by** means (T₄-T₅, N₁-N₅) connected in signal-generating manner to the control means (34) for measuring the temperature and the level of the hot liquid in the at least one buffer (8,9).

20. Apparatus (1) as claimed in any of the claims 10-19, **characterized in that** the dispensing openings (22) take a divided form.

21. Apparatus (1) as claimed in any of the claims 10-20, **characterized by** means (6) for searching for weed (W) connected in signal-generating manner to the control means (34).

22. Apparatus (1) as claimed in claim 21, **characterized in that** the search means (6) comprise at least one sensor (7) directed at the ground surface (S).

23. Apparatus (1) as claimed in claim 22, **characterized in that** the at least one sensor (7) is an optical sensor.

## Patentansprüche

1. Verfahren zur Bekämpfung von Unkraut (W), das auf einer Bodenfläche (S) wächst, das das Bewegen eines Versorgungsvorrats für eine heiße Flüssigkeit über die Bodenfläche (S) und das Ausgeben der heißen Flüssigkeit auf die Bodenfläche (S) in einer im wesentlichen drucklosen Weise umfasst,
wobei eine Suche nach dem Unkraut (W) durchgeführt wird und die heiße Flüssigkeit nur auf die detektierten Unkrautpflanzen (W) oder in deren direkte Umgebung ausgegeben wird,
**dadurch gekennzeichnet, dass** der Versorgungsvorrat für heiße Flüssigkeit in wenigstens einem Pufferspeicher (8, 9) gespeichert ist, der mit einer Anzahl von Ausgabeöffnungen (22) verbunden ist, und die heiße Flüssigkeit nur von der einen oder den mehreren Ausgabeöffnungen (22) ausgegeben wird, die sich über den detektierten Unkrautpflanzen (W) oder in deren direkter Umgebung befinden,
wobei die heiße Flüssigkeit aus dem wenigstens einen Pufferspeicher (8, 9) fortlaufend entlang der verschiedenen Ausgabeöffnungen (22) zirkuliert und **dadurch** abgegeben wird, dass ein Schließventil (23) betätigt wird, das mit der einen oder den mehreren betreffenden Ausgabeöffnungen (22) zusammenarbeitet.

2. Verfahren nach Anspruch 1, **dadurch gekennzeichnet, dass** die heiße Flüssigkeit im Pufferspeicher (8, 9) unter Druck gespeichert wird.

3. Verfahren nach Anspruch 1 oder 2, **dadurch gekennzeichnet, dass** die Flüssigkeit, wenn sie die Ausgabeöffnung(en) (22) verlässt, eine Temperatur hat, die zwischen 80 und 100°C, vorzugsweise zwischen 90 und 99°C und besonders vorzugsweise zwischen 93 und 98°C liegt.

4. Verfahren nach einem der vorhergehenden Ansprüche, **dadurch gekennzeichnet, dass** die heiße Flüssigkeit durch die Ausgabeöffnungen (22) quer zur Bewegungsrichtung (M) ausgegeben wird.

5. Verfahren nach einem der vorhergehenden Ansprüche, **dadurch gekennzeichnet, dass** die heiße Flüssigkeit von den Ausgabeöffnungen (22) in der Bewegungsrichtung (M) verteilt wird.

6. Verfahren nach Anspruch 5, **dadurch gekennzeichnet, dass** die heiße Flüssigkeit aufeinander folgend von verschiedenen Ausgabeöffnungen (22) ausgegeben wird, die in der Bewegungsrichtung (M) hintereinander liegen.

7. Verfahren nach einem der vorhergehenden Ansprüche, **dadurch gekennzeichnet, dass** die Flüssigkeit vor dem Speichern in dem wenigstens einen Pufferspeicher (8, 9) in wenigstens einem Versorgungsbehälter (10-12) in kaltem Zustand gespeichert wird, und dann aufgeheizt wird, wenn sie von dem wenigstens einen Versorgungsbehälter (10-12) zu dem wenigstens einen Pufferspeicher (8, 9) fließt.

8. Verfahren nach einem der vorhergehenden Ansprüche, **dadurch gekennzeichnet, dass** nach dem Unkraut (W) durch optische Mittel (6, 7) gesucht wird.

9. Verfahren nach Anspruch 8, **dadurch gekennzeichnet, dass** das Ausgeben der heißen Flüssigkeit elektronisch gesteuert wird.

10. Vorrichtung (1) zur Bekämpfung von Unkraut (W), das auf einer Bodenfläche (S) wächst, die ein Gestell (2) umfasst, das über die Bodenfläche (S) bewegt werden kann, und die folgendes aufweist: Mittel (4) zum Speichern und Zuführen heißer Flüssigkeit, Mittel (5) zum Ausgeben der heißen Flüssigkeit auf die Bodenfläche (S) in einer im wesentlichen drucklosen Weise und Steuerungsmittel (34), die die Ausgabemittel (5) so steuern, dass die heiße Flüssigkeit nur auf detektierten Unkrautpflanzen (W) oder in deren direkte Umgebung ausgegeben wird,
**dadurch gekennzeichnet, dass** die Mittel (4) zum Speichern und Zuführen der heißen Flüssigkeit wenigstens einen Pufferspeicher (8, 9) umfassen und die Ausgabemittel (5) eine Anzahl von Ausgabeöffnungen (22) umfassen, die mit dem wenigstens einen Pufferspeicher (8, 9) verbunden sind und die durch das Steuerungsmittel (34) betrieben werden können, wobei die verschiedenen Ausgabeöffnungen (22) mit dem wenigstens einen Pufferspeicher (8, 9) über eine Ringleitung (23, 24, 25) verbunden sind, in der eine Umlaufpumpe (29, 30, 31) angeordnet ist, zusätzlich zu einer Anzahl von Schließventil (33), die mit den betreffenden Ausgabeöffnungen (22) zusammenarbeiten und die durch die Steuerungsmittel (34) betrieben werden können.

11. Vorrichtung (1) nach Anspruch 10, **dadurch gekennzeichnet, dass** die Steuerungsmittel (34) dafür eingerichtet sind, die Öffnungsdauer und/oder den Grad der Öffnung der Schließventile (33) festzulegen.

12. Vorrichtung (1) nach Anspruch 11, **dadurch gekennzeichnet, dass** wenigstens ein Geschwindigkeitsmesser in einer Signal gebenden Weise an die Steuerungsmittel (34) angeschlossen ist, wobei die Steuerungsmittel (34) dafür eingerichtet sind, die Öffnungsdauer und/oder den Grad der Öffnung der Schließventile (33) auf der Basis eines Signals festzulegen, das von dem Geschwindigkeitsmesser erzeugt wird.

13. Vorrichtung (1) nach einem der Ansprüche 10 bis 12, **dadurch gekennzeichnet, dass** das Gestell (2) eine Anzahl von Gestellteilen (40, 41, 42) umfasst, die beweglich miteinander verbunden sind, wobei die Ausgabeöffnungen (22) in jedem Gestellteil (40, 41, 42) durch eine zugehörige Ringleitung (23, 24, 25) mit dem wenigstens einen Pufferspeicher (8, 9) verbunden sind.

14. Vorrichtung (1) nach einem der Ansprüche 10 bis 13, **dadurch gekennzeichnet, dass** die Ausgabeöffnungen (22) im Gestell (2) so angeordnet sind, dass sie quer zur Bewegungsrichtung (M) verteilt sind.

15. Vorrichtung (1) nach einem der Ansprüche 10 bis 14, **dadurch gekennzeichnet, dass** die Ausgabeöffnungen (22) im Gestell (2) so angeordnet sind, dass sie in der Bewegungsrichtung (M) verteilt sind.

16. Vorrichtung (1) nach Anspruch 15, **dadurch gekennzeichnet, dass** die Steuerungsmittel (34) dafür eingerichtet sind, aufeinander folgend verschiedene Ausgabeöffnungen (22) zu betätigen, die in der Bewegungsrichtung hintereinander angeordnet sind.

17. Vorrichtung (1) nach einem der Ansprüche 10 bis 16, **dadurch gekennzeichnet, dass** sie Mittel (35) umfasst, die mit dem wenigstens einen Pufferspeicher (8, 9) verbunden sind, um darin einen Überdruck zu erzeugen.

18. Vorrichtung (1) nach einem der Ansprüche 10 bis 17, **dadurch gekennzeichnet, dass** die Mittel (4) zum Speichern und Zuführen der heißen Flüssigkeit wenigstens einen Versorgungsbehälter (10-12) für kalte Flüssigkeit sowie wenigstens eine Pumpe (16-18) und Heizmittel (19-21), die zwischen dem wenigstens einen Versorgungsbehälter (10-12) und dem wenigstens einen Pufferspeicher (8, 9) angeordnet sind und die mit den Steuerungsmitteln (34) verbunden sind, umfassen.

19. Vorrichtung (1) nach Anspruch 18, **dadurch gekennzeichnet, dass** sie Mittel (T₄-T₅, N₁-N₅) umfasst, die in einer Signal gebenden Weise an die Steuerungsmittel (34) angeschlossen sind, um die Temperatur und den Pegel der heißen Flüssigkeit in dem wenigstens einen Pufferspeicher (8, 9) zu messen.

20. Vorrichtung (1) nach einem der Ansprüche 10 bis 19, **dadurch gekennzeichnet, dass** die Ausgabeöffnungen (22) eine geteilte Form haben.

21. Vorrichtung (1) nach einem der Ansprüche 10 bis 20, **dadurch gekennzeichnet, dass** sie Mittel (6) zur Suche von Unkraut (W) umfasst, die in einer Signal gebenden Weise mit den Steuerungsmitteln (34) verbunden sind.

22. Vorrichtung (1) nach Anspruch 21, **dadurch gekennzeichnet, dass** die Suchmittel (6) wenigstens einen Sensor (7) umfassen, der auf die Bodenfläche (S) gerichtet ist.

23. Vorrichtung (1) nach Anspruch 22, **dadurch gekennzeichnet, dass** der wenigstens eine Sensor (7) ein optischer Sensor ist.

## Revendications

1. Procédé de destruction de mauvaises herbes (W) se développant sur une surface du sol (S), comprenant le déplacement d'une alimentation en liquide chaud sur la surface du sol (S) et la distribution du liquide chaud sur la surface du sol (S) sensiblement sans pression,
dans lequel une recherche est effectuée quant aux mauvaises herbes (W) et le liquide chaud est distribué uniquement sur ou à proximité directe des plants de mauvaises herbes détectés (W),
**caractérisé en ce que** l'alimentation en liquide chaud est stockée dans au moins un réservoir (8, 9) qui est relié à un certain nombre d'ouvertures de distribution (22), et le liquide chaud est distribué uniquement par la/les ouverture(s) de distribution (22) située(s) au-dessus de ou à proximité directe des plants de mauvaises herbes détectés (W),
le liquide chaud provenant du réservoir au moins (8, 9) circulant de manière constante le long des différentes ouvertures de distribution (22), et étant délivré en actionnant une soupape d'arrêt (23) co-agissant avec la/les ouverture(s) de distribution en question (22).

2. Procédé selon la revendication 1, **caractérisé en ce que** le liquide chaud est stocké sous pression dans le réservoir (8, 9).

3. Procédé selon la revendication 1 ou 2, **caractérisé en ce que** le liquide possède une température, lorsqu'il quitte la/les ouverture(s) de distribution (22), qui se trouve entre 80 et 100°C, de préférence entre 90 et 99°C et encore de préférence entre 93 et 98°C.

4. Procédé selon l'une quelconque des revendications précédentes, **caractérisé en ce que** le liquide chaud est distribué par les ouvertures de distribution (22) de manière transversale par rapport à la direction de déplacement (M).

5. Procédé selon l'une quelconque des revendications précédentes, **caractérisé en ce que** le liquide chaud est distribué par les ouvertures de distribution (22) dans la direction dé déplacement (M).

6. Procédé selon la revendication 5, **caractérisé en ce que** le liquide chaud est distribué successivement par différentes ouvertures de distribution (22) se trouvant les unes derrière les autres dans la direction de déplacement (M).

7. Procédé selon l'une quelconque des revendications précédentes, **caractérisé en ce que**, avant le stockage dans le au moins un réservoir (8, 9), le liquide est stocké en étant froid dans au moins un conteneur d'alimentation (10-12) et est chauffé lorsqu'il circule depuis le au moins un conteneur d'alimentation (10-12) vers le au moins un réservoir (8, 9).

8. Procédé selon l'une quelconque des revendications précédentes, **caractérisé en ce que** les mauvaises herbes (W) sont recherchées par un moyen optique (6, 7).

9. Procédé selon la revendication 8, **caractérisé en ce que** la distribution du liquide chaud est contrôlée électroniquement.

10. Appareil (1) permettant de contrôler des mauvaises herbes (W) se développant sur une surface du sol (S), comprenant une armature (2) déplaçable sur la surface du sol (S) et ayant un moyen (4) permettant de stocker et de fournir un liquide chaud, un moyen (5) permettant de distribuer le liquide chaud sur la surface du sol (S) sensiblement sans pression, et un moyen de commande (34) qui contrôle le moyen de distribution (5) afin que le liquide chaud ne soit délivré que sur ou à proximité directe des plants de mauvaises herbes détectés (W),
**caractérisé en ce que** le moyen de stockage et d'alimentation (4) en liquide chaud comprend au moins un réservoir (8, 9), et le moyen de distribution (5) comprend un certain nombre d'ouvertures de distribution (22) qui sont reliées à au moins un réservoir (8, 9) et qui peuvent être actionnées par le moyen de commande (34), dans lequel les différentes ouvertures de distribution (22) sont reliées à au moins un réservoir (8, 9) par un conduit annelé (23, 24, 25) dans lequel une pompe de circulation (29, 30, 31) est agencée, en plus d'un certain nombre de soupapes d'arrêt (33) qui co-agissent avec la/les ouverture(s) de distribution en question (22) et qui peuvent être actionnées par le moyen de commande (34).

11. Appareil (1) selon 1 revendication 10, **caractérisé en ce que** les moyens de commande (34) sont adaptés afin de déterminer la durée d'ouverture et/ou le degré d'ouverture des soupapes d'arrêt (33).

12. Appareil (1) selon la revendication 11, **caractérisé par** au moins un indicateur de vitesse relié au moyen de commande (34) de façon à générer des signaux, dans lequel le moyen de commande (34) est adapté afin de déterminer la durée d'ouverture et/ou le degré d'ouverture des soupapes d'arrêt (33) sur la base d'un signal généré par l'indicateur de vitesse.

13. Appareil (1) selon l'une quelconque des revendications 10 à 12, **caractérisé en ce que** l'armature (2) comprend un certain nombre de parties d'armature (40, 41, 42) reliées de manière mobile les unes aux autres, et les ouvertures de distribution (22) dans chaque partie d'armature (40, 41, 42) sont reliées par un conduit annelé associé (23, 24, 25) à au moins un réservoir (8, 9).

14. Appareil (1) selon l'une quelconque des revendications 10 à 13, **caractérisé en ce que** les ouvertures de distribution (22) sont agencées dans l'armature (2) en étant réparties de manière transversale par rapport à la direction de déplacement (M).

15. Appareil (1) selon l'une quelconque des revendications 10 à 14, **caractérisé en ce que** les ouvertures de distribution (22) sont agencées dans l'armature (2) en étant réparties dans la direction de déplacement (M).

16. Appareil (1) selon la revendication 15, **caractérisé en ce que** le moyen de commande (34) est adapté afin d'actionner successivement les différentes ouvertures de distribution (22) agencées les unes derrière les autres dans la direction de déplacement (M).

17. Appareil (1) selon l'une quelconque des revendications 10 à 16, **caractérisé par** un moyen (35) relié à au moins un réservoir (8, 9) afin de créer une surpression à l'intérieur.

18. Appareil (1) selon l'une quelconque des revendications 10 à 17, **caractérisé en ce que** le moyen de stockage et d'alimentation (4) destiné au liquide chaud comprend au moins un conteneur d'alimentation (10-12) en liquide froid, ainsi qu'au moins une pompe (16-18) et un moyen de chauffage (19-21) qui sont agencés entre le au moins un conteneur d'alimentation (10-12) et le au moins un réservoir (8, 9) et qui sont reliés au moyen de commande (34).

19. Appareil (1) selon la revendication 18, **caractérisé par** un moyen (T₄-T₅, N₁-N₅) relié au moyen de commande (34) afin de générer des signaux et destiné à mesurer la température et le niveau de liquide chaud dans le au moins un réservoir (8, 9).

20. Appareil (1) selon l'une quelconque des revendications 10 à 19, **caractérisé en ce que** les ouvertures de distribution (22) adoptent une forme divisée.

21. Appareil (1) selon l'une quelconque des revendications 10 à 20, **caractérisé par** un moyen (6) destiné à rechercher des mauvaises herbes (W) relié au moyen de commande (34) afin de générer des signaux.

22. Appareil (1) selon la revendication 21, **caractérisé en ce que** le moyen de recherche (6) comprend au moins un capteur (7) dirigé vers la surface du sol (S).

23. Appareil (1) selon la revendication 22, **caractérisé en ce que** le au moins un capteur (7) est un capteur optique.
